# EUROPÄISCHE PATENTSCHRIFT

(11) **EP 3 710 899 B1**
(45) Veröffentlichungstag und Bekanntmachung des Hinweises auf die Patenterteilung: **01.12.2021**
(21) Anmeldenummer: 19706995.8
(22) Anmeldetag: 22.02.2019
(51) Int. Cl.: G05B 19/042, G05B 23/02

(54) **DIAGNOSEEINHEIT UND DIAGNOSEVERFAHREN**
DIAGNOSIS UNIT AND DIAGNOSES METHOD
UNITÉ ET PROCÉDÉ DE DIAGNOSTIC

(30) Priorität: 26.04.2018 DE 102018110084
(43) Veröffentlichungstag der Anmeldung: 23.09.2020
(73) Patentinhaber: Fibro GmbH, 74855 Hassmersheim (DE)
(72) Erfinder: KNAUP, Markus, 71549 Auenwald (DE)
(74) Vertreter: Staeger & Sperling Partnerschaftsgesellschaft mbB
(86) Internationale Anmeldenummer: PCT/EP2019/054431
(87) Internationale Veröffentlichungsnummer: WO 2019/206495

(56) Entgegenhaltungen:
- EP-A1- 1 130 484
- EP-A1- 1 502 031
- WO-A1-2005/085965
- DE-A1-102007 016 640

## Beschreibung

Die Erfindung betrifft eine Diagnoseeinheit zur Erfassung, Analyse und Datenhaltung von an einem Aktor oder an einem Maschinenelement erfassten Sensordaten.

Aus dem Stand der Technik sind bereits verschiedene Ausführungsformen von Diagnoseeinheiten für an Aktoren oder an Maschinenelementen erfasste Sensordaten bekannt. Zumeist sind diese unmittelbar in Steuergeräte der Aktoren integriert, sodass die Diagnoseeinheiten auf die Hardware und Software der Steuergeräte zurückgreifen. Hinzukommt, dass die von der Diagnoseeinheit verarbeiteten Daten meist lediglich einen zeitlichen Verlauf der über die Sensordaten ermittelten physikalischen Größen wiedergeben, ohne einen potentiellen Gefahrenzustand oder Handlungsanweisungen zur Vermeidung des Gefahrenzustands ermitteln zu können. Ferner gibt es oft keine Möglichkeit, die Sensordaten oder verarbeitete Sensordaten aus der Steuerung auszulesen, da solche Steuerungen oft geschützt und nur über spezielle Schnittstellen zugänglich sind. Nach außen wird durch die im Stand der Technik bekannten Diagnoseeinheiten daher oft durch lediglich ein optisches oder akustisches Warnsignal kommuniziert.

Zudem werden die Informationen von der Diagnoseeinheit meist nur drahtgebunden übertragen, sodass bei einem Nachrüsten einer Diagnoseeinheit eine zeitaufwändige und kostenintensive Neuverkabelung durchgeführt werden muss.

Verschiedene Diagnoseeinheiten zur Erfassung, Analyse und Datenhaltung von an einem Aktor erfassten Sensordaten sind beispielsweise aus den Dokumenten WO 2005/085965 A1, EP 1 130 484 A1, EP 1 502 031 A1 und DE 10 2007 016 640 A1 bekannt.

Der Erfindung liegt deshalb die Aufgabe zugrunde, vorbesagte Nachteile zu überwinden und eine Diagnoseeinheit zur Erfassung, Analyse und Datenhaltung von an einem Aktor erfassten Sensordaten bereitzustellen, mit welcher die analysierten Daten einfach weitergegeben werden können.

Diese Aufgabe wird durch die Merkmalskombination gemäß Patentanspruch 1 gelöst.

Erfindungsgemäß wird eine Diagnoseeinheit zur Erfassung, Analyse und Datenhaltung von an einem Aktor oder an einem Maschinenelement erfassten Sensordaten gemäß Anspruch 1 vorgeschlagen. Die Diagnoseeinheit weist zumindest einen Sensor, eine Datenverarbeitungseinheit, einen Datenhalter und eine Schnittstelleneinheit auf. Der zumindest eine Sensor, die Schnittstelleneinheit und der Datenhalter sind jeweils einen Datenaustausch ermöglichend und vorzugsweise drahtgebunden über jeweils eine Verbindungsleitung oder eine Bus-Leitung mit der Datenverarbeitungseinheit verbunden. Alternativ können der zumindest eine Sensor, die Schnittstelleneinheit und der Datenhalter statt drahtgebunden auch drahtlos mit der Datenverarbeitungseinheit verbunden sein. Die Diagnoseeinheit ist mit dem Aktor vorzugsweise in einer Baugruppe integriert. Die Baugruppe umfasst den Aktor und die Diagnoseeinheit. Die Diagnoseeinheit erfasst, speichert und verarbeitet die Sensordaten und gibt diese bei Bedarf über die Schnittstelleneinheit bzw. Gateway weiter, wobei die Datenverarbeitungseinheit vorzugsweise ausgebildet ist aus den Sensordaten eine Vorgehensweise zu ermitteln um einen nicht gewollten Zustand des Aktors zu vermeiden. Vorzugsweise wird ausschließlich die Vorgehensweise von der Datenverarbeitungseinheit über die Schnittstelleneinheit weitergegeben.

Ein Maschinenelement kann beispielsweise eine Gasdruckfeder sein, an der über die Diagnoseeinheit ein Gasdruck überwacht gespeichert und verarbeitet wird. Alternativ kommen als Maschinenelement auch andere Elemente, wie beispielsweise eine Schraube oder ein Metallgehäuse in Frage, an welchen zum Beispiel Schwingungen durch den Sensor erfasst und von der Diagnoseeinheit verarbeitet werden.

Zudem kann vorgesehen sein, dass die Diagnoseeinheit ferner eine Versorgungseinheit zur Stromversorgung aufweist, wobei die Versorgungseinheit eine Batterie oder ein Akkumulator ist, um eine autarke Stromversorgung zu ermöglichen. Alternativ kann die Stromversorgung der Diagnoseeinheit auch kabelgebunden über die Stromversorgung des Aktors erfolgen. Ferner kann die Versorgungseinheit bei einer alternativen Ausführungsform ein Generator sein, der über den Aktor angetrieben ist.

Die Schnittstelleneinheit bzw. Gateway weißt vorzugsweise ein Sende- und Empfangsmodul auf. Erfindungsgemäß ist die Schnittelleneinheit ausgebildet, Daten drahtlos an eine Steuerung des Aktors zu übermitteln und Daten drahtlos von der Steuerung zu empfangen. Zusätzlich zu der von der Diagnoseeinheit durchgeführten Diagnose werden erfindungsgemäß die Sensordaten an die Steuerung übertragen.

Die Diagnoseeinheit ist bei einer vorteilhaften Ausführungsvariante ferner über die Schnittstelleneinheit und vorzugsweise drahtlos mit einer Anzeigeeinheit verbunden. Dabei ist die Schnittstelleneinheit ausgebildet, Daten drahtlos an die Anzeigeeinheit zu übermitteln und/oder Daten drahtlos von der Anzeigeeinheit zu empfangen. Die Anzeigeeinheit kann beispielsweise ein Smartphone oder ein Tablet sein.

Die Datenverarbeitungseinheit ist erfindungsgemäß zudem ausgebildet, Sensordaten von dem zumindest einem Sensor zu empfangen, in dem Datenhalter abzuspeichern und aus den empfangenen und/oder in dem Datenhalter abgespeicherten Sensordaten durch ein Diagnoseverfahren Diagnosedaten zu erzeugen. Ferner ist die Datenverarbeitungseinheit ausgebildet, die Diagnosedaten in dem Datenhalter abzuspeichern und an die Schnittstelleneinheit zu übermitteln.

Zur Verarbeitung der ermittelten Sensordaten und um eine auf den Sensordaten basierende Diagnose zu ermöglichen, ist die Datenverarbeitungseinheit ausgebildet, an den Sensordaten eine Interpolation, Extrapolation, Fourier-Analyse und/oder Schwingungsdiagnose durchzuführen.

Die Schnittstelleneinheit ist erfindungsgemäß einen unmittelbaren Datenaustausch ermöglichend direkt bzw. unmittelbar mit dem Datenhalter verbunden. Zusätzlich ist der zumindest eine Sensor einen unmittelbaren Datenaustausch ermöglichend direkt bzw. unmittelbar mit dem Datenhalter verbunden.

Eine vorteilhafte Ausführung der Diagnoseeinheit sieht zudem vor, dass die Diagnoseeinheit in eine universelle Schnittstelle integriert ist. Die Schnittstelle kann dabei integral in einem Steckverbinder bzw. in einer Steckverbinderbuchse oder in einem Steckverbinderstecker ausgebildet sein. Alternativ kann die Diagnoseeinheit auch in einen Zwischenstecker integriert sein, der beispielsweise als Zwischenglied in eine Daten- oder Versorgungsleitung zwischen dem Aktor und seiner zugehörigen Steuerung eingesteckt ist.

Die Diagnoseeinheit kann zudem ein optisches Anzeigeelement aufweisen, das anzeigt, dass Daten von der Schnittstelleneinheit nach einer durchgeführten Analyse der Sensordaten zur Übermittlung bereitstehen.

Der Datenhalter kann von der Diagnoseeinheit trennbar ausgebildet sein, sodass die gespeicherten Daten extern ausgelesen werden können. Erfindungsgemäß wird ferner ein System umfassend eine Vielzahl an Baugruppen vorgeschlagen. Jede der Baugruppen weist einen Aktor und jeweils eine Sensordaten an dem Aktor erfassende erfindungsgemäße Diagnoseeinheit auf.

Eine vorteilhafte Weiterbildung sieht vor, dass die Diagnoseeinheiten über ihre jeweilige Schnittstelleneinheit mit einem Zentralgerät verbunden sind, welches die Daten gesammelt anzeigt oder weiterleitet.

Erfindungsgemäß wird ferner ein Verfahren zur Analyse von an einem Aktor erfassten Daten mit einer erfindungsgemäßen Diagnoseeinheit gemäß Anspruch 8 vorgeschlagen.

Bei einer Übereinstimmung des Aktorzustands mit einem Gefahrenzustand, kann aus den Sensordaten und/oder hinterlegten Kennfeldern eine Gefahrenquelle ermittelt werden, welche zu dem Gefahrenzustand führt, und in dem Datenhalter gespeichert werden.

Vorteilhaft bei einer Weiterbildung des Verfahrens ist, dass die Datenverarbeitungseinheit aus der Gefahrenquelle und den Sensordaten anhand einer Vielzahl vorbestimmter Vorgehensweisen eine Vorgehensweise zur Auflösung oder Vermeidung des Gefahrenzustands ermittelt. Anschließend wird zumindest die Vorgehensweise, der Aktorzustand und der Gefahrenzustand über die Schnittstelleneinheit an die Steuerung oder die Anzeigeeinheit übermittelt. Alternativ kann auch nur die Vorgehensweise übermittelt werden oder zunächst die Vorgehensweise und auf Anfrage weitere Daten wie Aktorzustand oder Gefahrenzustand übermittelt werden. Dabei können zumindest die Vorgehensweise, der Aktorzustand und der Gefahrenzustand aus dem Datenhalter ausgelesen und für die spätere Übermittlung in der Schnittstelleneinheit zwischengespeichert werden.

Die vorstehend offenbarten Merkmale sind beliebig kombinierbar, soweit dies technisch möglich ist und diese nicht im Widerspruch zueinander stehen. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt.

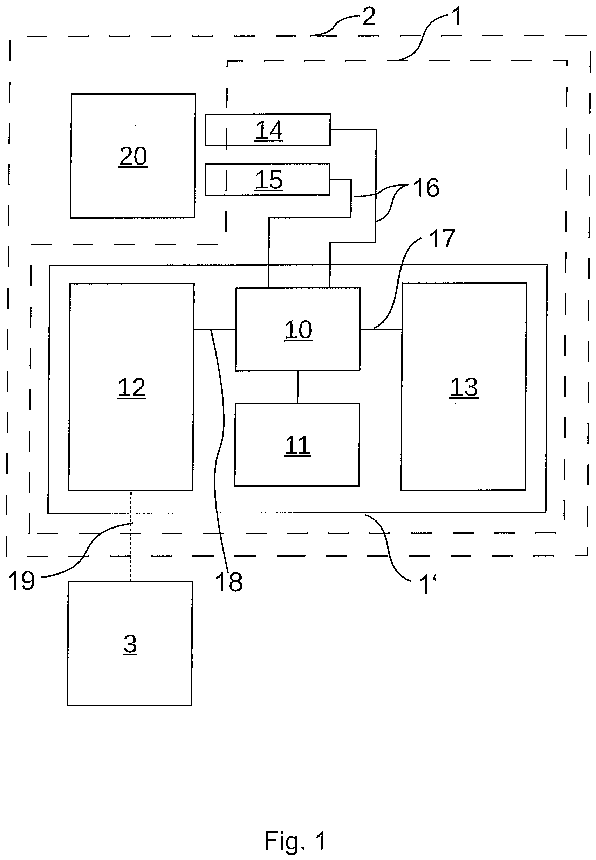

Figur 1 zeigt schematisch den topologischen Aufbau einer Baugruppe 2 aus einem Aktor 20 und einer Diagnoseeinheit 1. Die Diagnoseeinheit 1 weist zwei Sensoren 14, 15 auf, die jeweils eine physikalische Größe an dem Aktor 20 ermitteln. Ferner weist die Diagnoseeinheit 1 eine Datenverarbeitungseinheit 10, einen Datenhalter 11, eine Schnittstelleneinheit 12 und eine als Batterie 13 ausgeführte Versorgungseinheit auf, die in einem gemeinsamen Gehäuse 1' angeordnet sind. Die Sensoren 14, 15, die Batterie 13, der Datenhalter 11 und die Schnittstelleneinheit 12 sind jeweils über eine drahtgebundene Leitung 16, 17, 18 mit der Datenverarbeitungseinheit 10 verbunden.

Bei der in Figur 1 gezeigten Ausführungsform handelt es sich bei dem Aktor 20 um einen hydraulischen Zylinder, in welchem durch ein Fluid ein Innendruck aufgebaut wird. Der Sensor 14 erfasst einen durch das Fluid in dem Zylinder erzeugten Innendruck und leitet Informationen über den erfassten Innendruck in Form von Sensordaten über die Leitung 16 an die Datenverarbeitungseinheit 10 weiter. Die Datenverarbeitungseinheit 10 vergleicht intervallweise die von dem Sensor 14 übertragenen Sensordaten mit einem in dem Datenhalter 11 gespeicherten Maximalwert und ermittelt, ob der Innendruck den Maximalwert übersteigt. Zusätzlich werden die übertragenen Sensordaten mit ihrem Übertragungs- bzw. Messzeitpunkt auf dem Datenhalter 11 vorzugsweise in regelmäßigen Abständen gespeichert, sodass auf dem Datenhalter 11 eine Historie bzw. ein Verlauf der Sensordaten hinterlegt ist. In regelmäßigen Abständen ruft die Datenverarbeitungseinheit 10 zumindest einen Teil der gespeicherten Sensordaten ab und ermittelt durch Extrapolation der Sensordaten, wann der Innendruck den vorbestimmten Maximalwert übersteigt.

Der Innendruck in dem Zylinder entspricht dem Aktorzustand. Liegt der Innendruck unterhalb des Maximalwerts, handelt es sich um einen sicheren Aktorzustand, bei dem kein weiterer Handlungsbedarf besteht. Übersteigt der Innendruck den Maximalwert oder wird durch die Extrapolation der Daten ermittelt, dass der Maximalwert innerhalb einer vorbestimmten Zeitspanne von beispielsweise 24 Stunden überschritten wird, handelt es sich um einen Gefahrenzustand. Abhängig von weiteren Sensordaten, wie beispielsweise Umgebungstemperatur, Zylindertemperatur, Position des Zylinders, und in dem Datenhalter 11 hinterlegten Daten zu dem Aktor, wie beispielsweise Alter, Bautyp oder Betriebskennwerten, wird von der Datenverarbeitungseinheit 10 aus einer Gruppe von möglichen Handlungsalternativen zur Auflösung des Gefahrenzustands, die in dem Datenhalter 11 gespeichert sind, eine Handlungsanweisung bzw. Vorgehensweise ausgewählt, die mit den zur Verfügung stehenden Daten korreliert.

Nach dem eine Vorgehensweise ausgewählt wurde, speichert die Datenverarbeitungseinheit 10 durch einen Merker das Vorhandensein eines Gefahrenzustands zusammen mit allen zugehörigen Sensordaten und der Vorgehensweise ab und überträgt die Vorgehensweise zusammen mit den jeweiligen Sensordaten über die Schnittstelleneinheit 12 und die drahtlose Verbindung 19 an eine Anzeigeeinheit 3. Schlägt die Übertragung fehl, versucht die Schnittstelleneinheit 12, solange der Merker gesetzt ist, die Vorgehensweise zusammen mit den zugehörigen Sensordaten in regelmäßigen Abständen an die Anzeigeeinheit zu übertragen.

Wurde der Gefahrenzustand behoben, wird das durch die Sensoren 14, 15 erkannt und der gesetzte Merker gelöscht.

## Patentansprüche

1. Diagnoseeinheit (1) zur Erfassung, Analyse und Datenhaltung von an einem Aktor (20) erfassten Sensordaten,
wobei die Diagnoseeinheit (1) zumindest einen Sensor (14, 15) zur Generierung von Sensordaten, eine Datenverarbeitungseinheit (10) zur Ermittlung eines auf den Sensordaten basierenden Aktorzustands und zum Vergleich des Aktorzustands mit vorbestimmten Gefahrenzuständen, einen Datenhalter (11) zur Speicherung von Sensordaten und eine Schnittstelleneinheit (12) aufweist,
wobei der zumindest eine Sensor (14, 15), die Schnittstelleneinheit (12) und der Datenhalter (11) jeweils einen Datenaustausch ermöglichend mit der Datenverarbeitungseinheit (10) verbunden sind und
wobei die Schnittstelleneinheit (12) ausgebildet ist, Daten drahtlos an eine Steuerung des Aktors (20) zu übermitteln und Daten drahtlos von der Steuerung zu empfangen, und
wobei die Datenverarbeitungseinheit (10) ausgebildet ist, Sensordaten von dem zumindest einem Sensor (14, 15) zu empfangen, in dem Datenhalter (11) abzuspeichern und aus den empfangenen und/oder in dem Datenhalter (11) abgespeicherten Sensordaten durch ein Diagnoseverfahren Diagnosedaten zu erzeugen,
wobei die Datenverarbeitungseinheit (10) ferner ausgebildet ist, die Diagnosedaten in dem Datenhalter (11) abzuspeichern und an die Schnittstelleneinheit (12) zu übermitteln,
wobei die Schnittstelleneinheit (12) einen unmittelbaren Datenaustausch ermöglichend unmittelbar mit dem Datenhalter (11) verbunden ist
und der zumindest eine Sensor (14, 15) einen unmittelbaren Datenaustausch ermöglichend unmittelbar mit dem Datenhalter (11) verbunden ist.

2. Diagnoseeinheit (1) nach Anspruch 1, wobei
die Diagnoseeinheit (1) ferner mit einer Anzeigeeinheit (3) verbunden ist und
die Schnittstelleneinheit (12) ausgebildet ist, Daten drahtlos an die Anzeigeeinheit (3) zu übermitteln und/oder Daten drahtlos von der Anzeigeeinheit (3) zu empfangen.

3. Diagnoseeinheit (1) nach einem der vorhergehenden Ansprüche, wobei
die Datenverarbeitungseinheit (10) ausgebildet ist, an den Sensordaten eine Interpolation, Extrapolation, Fourier-Analyse und/oder Schwingungsdiagnose durchzuführen.

4. Diagnoseeinheit (1) nach einem der vorhergehenden Ansprüche,
wobei die Diagnoseeinheit (1) ferner eine Versorgungseinheit zur Stromversorgung aufweist, welche eine Batterie (13) oder ein Akkumulator ist.

5. Diagnoseeinheit (1) nach einem der vorhergehenden Ansprüche,
wobei die Diagnoseeinheit (1) mit dem Aktor (20) in einer Baugruppe integriert ist.

6. Diagnoseeinheit (1) nach einem der vorhergehenden Ansprüche, wobei die Diagnoseeinheit (1) in eine universelle Schnittstelle integriert ist.

7. System umfassend eine Vielzahl von Baugruppen (2), wobei jede Baugruppe (2) einen Aktor (20) und jeweils eine Sensordaten an dem Aktor (20) erfassende Diagnoseeinheit (1) nach einem der vorhergehenden Ansprüche aufweist.

8. Verfahren zur Analyse von an einem Aktor (20) erfassten Daten mit einer Diagnoseeinheit (1) nach einem der vorhergehenden Ansprüche 1 bis 5, wobei
der zumindest eine Sensor (14, 15) aus an dem Aktor (20) gemessenen physikalischen Größen Sensordaten generiert und diese an den Datenhalter (11) und
die Datenverarbeitungseinheit (10) übermittelt und die Sensordaten in dem Datenhalter (11) gespeichert werden,
die Datenverarbeitungseinheit (10) aus den übermittelten und/oder gespeicherten Sensordaten einen momentanen und/oder zukünftigen Aktorzustand ermittelt und in dem Datenhalter (11) speichert, die Datenverarbeitungseinheit (10) den Aktorzustand mit vorbestimmten Gefahrenzuständen vergleicht, und die Schnittstelleneinheit sowohl die Sensordaten als auch von der Datenverarbeitungseinheit erzeugten Diagnosedaten an die Steuerung des Aktors zu übermitteln

9. Verfahren nach dem vorhergehenden Anspruch,
wobei die Datenverarbeitungseinheit (10) bei Übereinstimmung des Aktorzustands mit einem Gefahrenzustand aus den Sensordaten und/oder hinterlegten Kennfeldern eine zu dem Gefahrenzustand führende Gefahrenquelle ermittelt und in dem Datenhalter (11) speichert.

10. Verfahren nach dem vorhergehenden Anspruch, wobei die Datenverarbeitungseinheit (10) aus der Gefahrenquelle und den Sensordaten anhand einer Vielzahl vorbestimmter Vorgehensweisen eine Vorgehensweise zur Auflösung oder Vermeidung des Gefahrenzustands ermittelt und zumindest die Vorgehensweise, der Aktorzustand und der Gefahrenzustand über die Schnittstelleneinheit (12) an die Steuerung oder die Anzeigeeinheit übermittelt.

11. Baugruppe aus einer Gasdruckfeder und einer Diagnoseeinheit gemäß einem der Ansprüche 1 bis 5,
wobei der zumindest eine Sensor ausgebildet ist, einen in der Gasdruckfeder herrschenden Gasdruck zu erfassen,
und wobei die Diagnoseeinheit ausgebildet ist, den Gasdruck zu überwachen, zu speichern und zu verarbeiten.

## Claims

1. A diagnosis unit (1) for the detection, analysis, and data management of sensor data detected on an actuator (20),
wherein the diagnosis unit (1) has at least one sensor (14, 15) for generating sensor data, a data processing unit (10) for determining an actuator state based on the sensor data and for comparing the actuator state with predetermined hazard states, a data manager (11) for storing sensor data, and an interface unit (12),
wherein the at least one sensor (14, 15), the interface unit (12), and the data manager (11) are respectively connected to the data processing unit (10), enabling data exchange; and
wherein the interface unit (12) is formed to transmit data wirelessly to a control of the actuator (20) and to receive data wirelessly from the control, and wherein the data processing unit (10) is designed to receive sensor data from the at least one sensor (14, 15), to store the data in the data manager (11), and to generate diagnostic data from the sensor data received and/or stored in the data manager (11) by means of a diagnostic method,
wherein the data processing unit (10) is furthermore designed to store the diagnostic data in the data manager (11) and to transmit the data to the interface unit (12),
wherein the interface unit (12) is directly connected to the data manager (11) enabling direct exchange of data, and the at least one sensor (14, 15) is directly connected to the data manager (11) enabling direct exchange of data.

2. The diagnosis unit (1) according to claim 1, wherein the diagnosis unit (1) is further connected to a display unit (3) and the interface unit (12) is formed to transmit data wirelessly to the display unit (3) and/or to receive data wirelessly from the display unit (3)

3. The diagnosis unit (1) according to one of the preceding claims, wherein the data processing unit (10) is formed to carry out an interpolation, extrapolation, Fourier-analysis, and/or vibration diagnosis on the sensor data.

4. The diagnosis unit (1) according to one of the preceding claims, wherein the diagnosis unit (1) further comprises a supply unit for the power supply, which is a battery (13) or an accumulator.

5. The diagnosis unit (1) according to one of the preceding claims, wherein the diagnosis unit (1) is integrated with the actuator (20) in one assembly.

6. The diagnosis unit (1) according to one of the preceding claims, wherein the diagnosis unit (1) is integrated into a universal interface.

7. A system comprising a plurality of modules (2), wherein each module (2) has an actuator (20) and a respective diagnosis unit (1) according to one of the preceding claims which detects sensor data on the actuator (20).

8. A method for analyzing data detected on an actuator (20) with a diagnosis unit (1) according to any of preceding claims 1 to 5, wherein
the at least one sensor (14, 15) generates sensor data from physical variables measured on the actuator (20) and transmits said data to the data manager (11) and the data processing unit (10), and the sensor data are stored in the data manager (11),
the data processing unit (10) determines a current and/or future actuator state from the transmitted and/or stored sensor data and stores the actuator state in the data manager (11), the data processing unit (10) compares the actuator state to predetermined hazard states, and the interface unit to transmit both the sensor data and diagnostic data generated by the data processing unit to the control of the actuator.

9. The method according to the preceding claim, wherein the data processing unit (10), when the actuator state corresponds to a hazard state, determines a hazard source leading to the hazard state from the sensor data and/or stored characteristic maps and stored in the data manager (11).

10. The method according to the preceding claim, wherein the data processing
unit (10) determines a procedure for eliminating or preventing the hazard state from the hazard source and the sensor data by means of a plurality of predetermined procedures, and at least the procedure, the actuator state, and the hazard state are transmitted to the control or the display unit via the interface unit (12).

11. An assembly of a gas pressure spring and a diagnosis unit according to one of
the claims 1 to 5, wherein the at least one sensor is formed to detect a gas pressure prevailing in the gas pressure spring, and wherein the diagnosis unit is formed to monitor, store and process the gas pressure.

## Revendications

1. Unité de diagnostic (1) permettant d'acquérir, d'analyser et d'enregistrer des données de capteur acquises au niveau d'un actionneur (20),
l'unité de diagnostic (1) présentant au moins un capteur (14, 15) pour générer des données de capteur, une unité de traitement de données (10) pour déterminer un état d'actionneur basé sur les données de capteur, et pour comparer l'état d'actionneur avec des états dangereux prédéterminés, un support d'enregistrement de données (11) pour stocker des données de capteur, et une unité d'interface (12),
ledit au moins un capteur (14, 15), l'unité d'interface (12) et le support d'enregistrement de données (11) étant reliés à l'unité de traitement de données (10) en permettant un échange de données respectivement, et
l'unité d'interface (12) étant réalisée pour transmettre sans fil des données à un dispositif de commande de l'actionneur (20) et pour recevoir sans fil des données en provenance du dispositif de commande, et
l'unité de traitement de données (10) étant réalisée pour recevoir des données de capteur du au moins un capteur (14, 15), pour les stocker sur le support d'enregistrement de données (11), et pour générer par un procédé de diagnostic des données de diagnostic à partir des données de capteur reçues et/ou stockées sur le support d'enregistrement de données (11),
l'unité de traitement de données (10) étant en outre réalisée pour stocker les données de diagnostic sur le support d'enregistrement de données (11) et pour les transmettre à l'unité d'interface (12),
l'unité d'interface (12) étant reliée directement au support d'enregistrement de données (11) en permettant un échange de données direct,
et ledit au moins un capteur (14, 15) est relié directement au support d'enregistrement de données (11) en permettant un échange de données direct.

2. Unité de diagnostic (1) selon la revendication 1, dans laquelle
l'unité de diagnostic (1) est en outre reliée à une unité d'affichage (3), et
l'unité d'interface (12) est réalisée pour transmettre sans fil des données à l'unité d'affichage (3) et/ou pour recevoir sans fil des données de l'unité d'affichage (3).

3. Unité de diagnostic (1) selon l'une quelconque des revendications précédentes, dans laquelle l'unité de traitement de données (10) est réalisée pour effectuer sur les données de capteur une interpolation, une extrapolation, une analyse de Fourier et/ou un diagnostic vibratoire.

4. Unité de diagnostic (1) selon l'une quelconque des revendications précédentes,
dans laquelle l'unité de diagnostic (1) présente en outre une unité d'alimentation pour l'alimentation en courant qui est une batterie (13) ou un accumulateur.

5. Unité de diagnostic (1) selon l'une quelconque des revendications précédentes,
dans laquelle l'unité de diagnostic (1) est intégrée avec l'actionneur (20) dans un module.

6. Unité de diagnostic (1) selon l'une quelconque des revendications précédentes, dans laquelle l'unité de diagnostic (1) est intégrée dans une interface universelle.

7. Système, comprenant une pluralité de modules (2), dans lequel chaque module (2) présente un actionneur (20) et respectivement une unité de diagnostic (1) selon l'une quelconque des revendications précédentes acquérant des données de capteur au niveau de l'actionneur (20).

8. Procédé permettant d'analyser des données acquises au niveau d'un actionneur (20) à l'aide d'une unité de diagnostic (1) selon l'une quelconque des revendications précédentes 1 à 5, dans lequel
ledit au moins un capteur (14, 15) génère à partir de grandeurs physiques mesurées au niveau de l'actionneur (20) des données de capteur et les transmet au support d'enregistrement de données (11) et à l'unité de traitement de données (10), et les données de capteur sont stockées sur le support d'enregistrement de données (11),
l'unité de traitement de données (10) détermine à partir des données de capteur transmises et/ou stockées un état d'actionneur instantané et/ou futur et le stocke sur le support d'enregistrement de données (11), l'unité de traitement de données (10) compare l'état d'actionneur à des états dangereux prédéterminés, et l'unité d'interface transmet à la fois les données de capteur et les données de diagnostic générées par l'unité de traitement de données au dispositif de commande de l'actionneur.

9. Procédé selon la revendication précédente, dans lequel l'unité de traitement de données (10), en cas de concordance entre l'état d'actionneur et un état dangereux, détermine à partir des données de capteur et/ou de diagrammes caractéristiques mémorisés une source de danger entraînant l'état dangereux et la stocke sur le support d'enregistrement de données (11).

10. Procédé selon la revendication précédente, dans lequel l'unité de traitement de données (10) détermine à partir de la source de danger et des données de capteur à l'aide d'une pluralité de procédures prédéterminées une procédure pour résoudre ou éviter l'état de danger et transmet au moins la procédure, l'état d'actionneur et l'état de danger par l'intermédiaire de l'unité d'interface (12) au dispositif de commande ou à l'unité d'affichage.

11. Module composé d'un ressort à gaz et d'une unité de diagnostic selon l'une quelconque des revendications précédentes 1 à 5,
dans lequel ledit au moins un capteur est réalisé pour acquérir une pression de gaz régnant dans le ressort à gaz,
et dans lequel l'unité de diagnostic est réalisée pour surveiller, stocker et traiter la pression de gaz.
